# EUROPEAN PATENT APPLICATION

(11) **EP 4 331 449 A1**
(43) Date of publication of application: **06.03.2024**
(21) Application number: 23752913.6
(22) Date of filing: 08.02.2023
(51) Int. Cl.: A47J 42/10, B02C 13/14, B02C 13/28

(54) **GRINDER**

(30) Priority: 10.02.2022 JP 2022019177
(71) Applicant: Araie Mfg.Co.,Ltd., Kaga-shi, Ishikawa 922-0312 (JP)
(72) Inventor: TANAKA, Yoshinori, Higashimurayama-shi Tokyo 189-0022 (JP); YAMASHITA, Kimihiko, Kaga-shi Ishikawa 922-0312 (JP)
(74) Representative: Pes, Matteo
(86) International application number: PCT/JP2023/004225
(87) International publication number: WO 2023/153449

(57) **Abstract**

To provide a grinder for realizing granularity stabilization while having easy maintenance.

A grinder including a rotation body 2 exhibiting an almost conical shape and having a rotation axis, the rotation axis passing a top of the almost conical shape and crossing a bottom face at a right angle, and a grinding mechanism, the grinding mechanism having a configuration for grinding an object to be ground by a stator body 3 exhibiting an almost cylinder shape and an inner face disposed opposite to a lateral face part of the rotation part 2 is provided, characterized in that a lateral face of the rotation body 2 and a surface of the inner face of the stator body 3 comprise concave/convex blades 20, the concave/convex blades 20 are formed as multi-stages along to a rotation axis direction, and the concave/convex blades of each stage are each separated along the rotational axis direction.

## Description

### Field of Invention

The present invention relates to a grinder for grinding an object to be ground such as various materials as well as food.

### Background of Invention

For example, when an object to be ground is assumed to be coffee beans, coffee-based beverages, which are obtained by roasting coffee beans and by extracting ingredients with hot water or cold water from the powder obtained by grinding the roasted coffee beans, have been popular from long ago. Even if the ingredients are extracted from roasted coffee beans, the extraction efficiency of coffee extract is low; however, with grinding finely the roasted coffee beans, the extraction efficiency can be enhanced, and extraction speed will increase. Grinding is necessary in the material other than coffee for enhancing the extraction efficiency.

Particularly in coffee, the extraction speed of ingredients varies depending on sizes and shapes of milled powder, which affects the taste of coffee. There are cases where heat generation under grinding may affect the ingredients of object to be ground. Thus, it is regarded that the grinding step of coffee beans is an important step.

Therefore, grinder (coffee mill or coffee grinder) having various configurations have been conventionally proposed. First, propeller type one, which grinds the object to be ground by motor-driven propellers rotating at high speed in a container containing the object to be ground, may be enumerated. This propeller-type grinder is low-cost as well as space-saving; however, there is the problem in hardness to control grinding meshes such that even granularity is hard to be obtained as well as generation of heat affecting to the object to be ground. Second, a flat-cutter type grinder, which mills the object to be ground such a manner that the object to be ground is pounded by engaging milling-teeth having concaves/convexes as a mortar, may be enumerated. This grinder of flat-cutter type can stabilize the unevenness in granularity; can easily adjust the grinding mechs; and can enhance processing speed by changing the sizes of cutters and the like; however, its structure becomes a stationary size while presenting the problem of uneasy-maintenances such as disassembling and cleaning. Besides, a conical-type grinder, which chops the beans by combining rotation blades and stator blades, is inferior in the stability of granularity, but has the advantage of easiness in space saving while having a problem that there are many cases being hard to maintenance. Lastly, a roller-grinder, in which pairs of rollers which have cutting recess on their surface are multiply disposed and each pair of rollers has different spacings to grind the object to be ground passing therethrough, exhibits extremely high processing ability while making the unevenness in granularity lowest; however, the production rate of fine particles, which affect the taste, is high, and the machinery structure becomes large and complex due to a large-scaled industrial product.

Nowadays, rather than shops, the needs in which one selects oneself coffee beans including their roasting states and grinds them oneself and enjoys coffee alone or a few members in private scenes such as one's own house or as a camp etc., becomes popular and popular, and as for grinder for such situation, the most suitable grinder is considered to be a conical-type grinder and the conical-type grinder becomes compact in its structure; however, there are problem that its low processing speed and insufficient stability in the granularity presents the limitation to reproductivity in the taste. Besides, the structural issues of uneasy maintenance also present the problem of mixing of the object to be ground remained in the grinder, which impacts largely the taste and lowers the reproducibility in the taste.

Thus, with respect to a conical-type grinder, Patent Literature 1 aims to provide a mortar body and a milling apparatus for producing much powder having a predetermined particle size and realizing stable granularity, and the mortar body comprises an inner mortar part (20) and an outer mortar part (30) and the inner surface of the outer mortar (30)is formed with a second inlet concave part (33) and a second inlet convex part (34). The second inlet concave part (33) is composed from a group of three different inlet concave parts in their areas each other, and this group is repeated. Adjacent to a second inlet-large concave part (33A), a second inlet-middle concave part (33B) is arranged; adjacent to the second inlet-middle concave part (33B), a second inlet-small concave part (33C) is arranged; further adjacent to the second inlet-small concave part (33C), a second inlet-large concave part (33A) is arranged; and this arrangement is repeated.

The second inlet-convex part (34) is composed from a group of three different inlet-convex parts in their angles each other and this group is repeated to configure. Adjacent to a second inlet-small convex part (34A), a second inlet-middle convex part (34B) is arranged; adjacent to the second inlet-middle convex part (34B), a second inlet-large convex part (34C) is arranged; further adjacent to the second inlet-large convex part (34C), a second inlet-small convex part (34A) is arranged; and these arrangements repeated to form the mortar body and the milling apparatus.

Furthermore, Patent Literature 2 aims to provide a coffee beans mortar-mechanism without fears of food-hazard by remaining the powder of coffee beans accumulated in the coffee beans mortar mechanism and permeating the remained and spoiled powder to the powder of coffee beans normally ground and the coffee beans mortar mechanism (1) can be disassembled easily.

Thus, a rotation part (7) for adjusting granularity, an upwardly and downwardly movable cam (5), and a conical outer blade (6) can be each brought distally from a drum (2a) by moving to the direction parallel to a center axis of a rotation shaft (9). Besides, since a conical inner blade (4) and a rotation wing (3) are attached detachably to the rotation shaft (9) by a nut (10) so as to be removed from a base easily (2). Therefore, a coffee beans mortar mechanism is disclosed, which can remove easily powder accumulated unground powder in a drum (2a) or ground powder adhered to each part.

### Prior Art Literature

### Patent Literature

Patent Literature 1 Republication of International Patent Application JP2020/217500
Patent Literature 2 Republication of International Patent Application JP2019/142758

### Summary of Invention

### Problem to be Solved by Invention

In the cases of above conventional arts disclosed in Patent Literature 1 and Patent Literature 2, even if suppression of fine powder or a predetermined grinding meshes are set, the issue of unevenness of granularity of powder each time produced becomes unstable cannot be solved. In Patent Literature 1, with respect to the structure that performed grinding by juxtaposed blades having different sizes, the position changes of object to be ground do not likely occur and the evenness in granularity and particle shapes are impacted, and further improvements of maintenance should be required. With respect to Patent Literature 2, the structure is provided for easy removal of the remained ground beans and the issue for the maintenance has been overcome; however, its structure becomes a cantilevered structure and is disadvantageous for adjustment in an axial direction as well as for the enhancement of processing performance such that issues such as granularity and particle shapes have still been remained.

When the coffee powder having various granularities is produced and distributions of granularities become different every time, extraction conditions becomes uneven resulting in the impact to taste. That is, the fact that the tastes become different depending on the coffee powder every time produced means that the reproducibility of taste becomes poor and will lead to the failure of enjoining the same taste with the same coffee beams. Furthermore, when the maintenance is poor and remained and milled beans could not be recovered easily, the instance that such beans become mixed to the powder of coffee beans later produced such that the taste can be further influenced.

Thus, an object of the present invention is to realize higher-order stability of granularity and unevenness about particle shapes to suppress production of fine particles causing odd-flavor in the taste, and in addition to provide a grinder with improved easiness in maintenance for removing remained and ground beans.

Now, the grinder of the present invention is not limited to foods such as coffee beans and the like and can be applied to pulverization and atomization of various materials.

### Means for Solving Problem

A grinder including a rotation body exhibiting an almost conical shape and having a rotation axis, the rotation axis passing a top of the almost conical shape and crossing a bottom face at a right angle, and a grinding mechanism, the grinding mechanism having a configuration for grinding an object to be ground by a stator body exhibiting an almost cylinder shape and facing an inner face opposite to a lateral face part of the rotation part,
characterized in that a lateral face of the rotation body and a surface of the inner face of the stator body comprise concave/convex blades continuing convex blades and concave part alternatively, the concave/convex blades are formed as multi-stages along to a rotation axis direction of the rotation body, and the concave/convex blades at each stage are each separated along a rotation axis direction of the rotation body.

A grinder including a rotation body exhibiting an almost conical shape and having a rotation axis, the rotation axis passing a top of the almost conical shape and crossing a bottom face at a right angle, and a grinding mechanism, the grinding mechanism having a configuration for grinding an object to be ground by a stator body exhibiting an almost cylinder shape and facing an inner face opposite to a lateral face part of the rotation part,
characterized in that at least one surface of the lateral face of the rotation body and the inner face of the stator body opposite each other comprises concave/convex blades continuing convex blades and concave part alternatively, the concave/convex blades are formed as multi-stages along a rotation axis direction, the concave/convex blades in each stage are each separated along the rotation axis direction, and a guiding part is formed on a surface of other one for aligning an object to be ground to guide from top to bottom.

Here, it means that the concave parts of the concave/convex blades are formed lower than heights of the tips of the convex blades (lengths of the convex blades) and configurations for forming lower than the heights of a bottom of the convex blades are not limited.

Furthermore, the configurations of concave/convex blades at each stage such as the number of convex blade, shape, and size are designed depending on conditions of ground object, and the object to be ground is cut and/or ground stepwise from top to bottom while becoming finer gradually.

In the grinder of the present invention, when the grinding mechanism is configured only by the concave/convex blades, the characteristics is in that cavities are formed at each stage at vicinities of boundaries of the concave/convex blades formed to the rotation body and/or the stator body formed as multi-stages; and when the grinding mechanism is configured by the concave/convex blades and the guiding part, the characteristics is in that the cavities are formed at vicinities of the boundaries of concave/convex blades at each stage formed as multi-stages, and/or the cavities are formed at relative positions at vicinities of boundaries of the concave/convex blades at each stage of the guiding part.

Here, the cavity is a void gap (space) formed by concave recesses disposed on a surface of a lateral face of the rotation body and/or disposed on a surface of the inner face of stator body at vicinities including a boundary (between-stage space) of the concave/convex blades at each stage or positions relative to vicinities including a boundary of the concave/convex blades at each stage of the guiding part.

It is contemplated that there are the cases where the concave/convex blades are disposed to the rotation body, the concave/convex blades are disposed to the stator body, and the concave/convex blades are disposed to both of them.

### Advantageous Effect

According to the present invention, since the concave/convex blades are formed as multi-stages along a rotation axis direction of a rotation body and an object to be ground is cut and/or ground stepwise from top to bottom to make finer particles gradually, the grinder becomes one characterized in that excess loads are not imparted to the object to be ground; the production of finer powder is suppressed; and the granularity becomes stable.

In addition, if a configuration is to be such as Patent Literature 1, there is the possibility of overflow, when clogging of meshes occurs, that stops the flow to the next blades on the way; however, according to the present invention, the object to be ground cut and/or ground at the upper stage is temporarily retained in the cavity and is supplied to the lower stage gradually such that the trouble in that the object to be ground is supplied excessively to the lower stage causing overflow from grinding may be suppressed.

In addition, by using the cavity, excess cutting and/or grinding may be prevented so as to obtain powder of the object to be ground with a stable granularity smoothly, and moreover by providing the position change to the object to be ground, the powder of the object to be ground having even shapes can be obtained while not making the cutting and/or grinding position of the object to be ground uneven as a conventional grinder.

Now, if the cavities with aligning positions to both of the rotation body and stator body are formed, a capacity (volume) of the cavity can be increased such that a structural selection may be allowed depending on requirements in product functions.

As described above, if rather than only making the granularity and particle shape of obtained powder even, the concave/convex blades are disposed to only one of the rotation body or the stator body, when compared to the case likely to a conventional grinder where the concave/convex blades are disposed to the rotation body and the stator body, when considering cleaning under maintenance, since a concave/convex blades side to which the coffee beans are bitten is one side, the provision of grinder realizing easy-maintenance become possible. Furthermore, cutting and/or grinding stepwise by blades formed as multi-stages rather than a structure for grinding with a conventional blades also provides an advantage of reducing heat impact of the object to be ground by heat generation under the grinding.

### Brief Description of Drawings

Fig. 1 is an illustration of an appearance of a grinder of an embodiment of the present invention.
Fig. 2 is a cross-sectional perspective view illustrating an inner structure of a grinder of the present embodiment.
Fig. 3 is a perspective view of an inner structure of a grinder of the present embodiment.
Fig. 4 is an illustration of a rotation body and a stationary body adopted in a conventional art.
Fig. 5 is an illustration showing rotation body of the present embodiment.
Fig. 6 is a perspective view showing a stationary body of the present embodiment.
Fig. 7 is an illustration showing a positional relation of a rotation body and a stationary body of the present embodiment.
Fig. 8 is an illustration of a rotation body of the present embodiment and a comparative example.
Fig. 9 is an illustration of experimental results of the present embodiment.

### Embodiment for Practicing Invention

### (Embodiment)

An embodiment for practicing the present invention will be hereafter descrived specifically based on drawings as a conical-type grinder (hereafter noted as grinder).

### (Outline of Grinder)

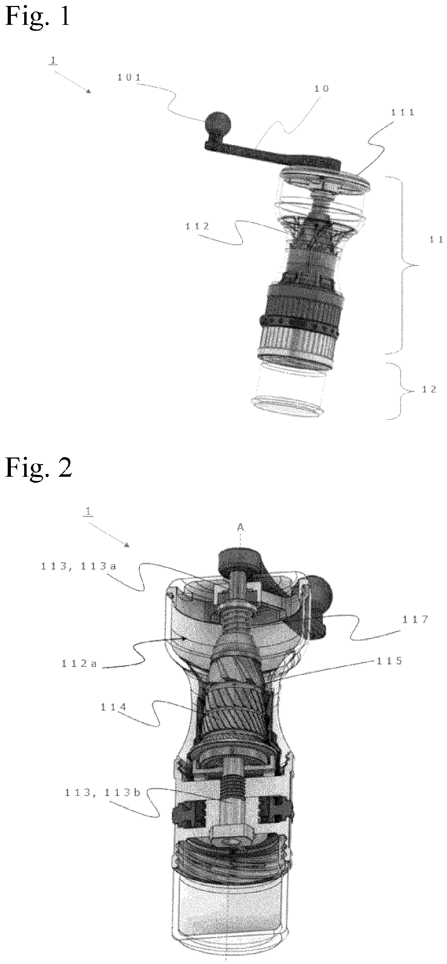

Fig. 1 is a drawing illustrating an appearance of a grinder 1 of the present embodiment, and when Fig. 1 is assumed to define a front side of the grinder 1, the grinder 1 is shown, from top to bottom, to be formed with a handle 10 having a knob 101, a main body 11 supplied with coffee beans X to be milled, and a receiver container 12 for recovering coffee beans X milled into powder.

This part should not be limited to the structure having the knob and handle and may be the structure for allowing the rotation body to rotate. With respect to driving power for rotating the rotation body, the driving power such as an electric motor and the like may be selected.

Fig. 2 is a cross sectional perspective view illustrating an inner structure of the grinder 1, and one end is connected to the handle 10; the other end exhibits an almost conical shape; an upper-shaft 113a connected to the rotation body 114 to which a plurality of concave/convex blades is formed on its lateral side, a stator body 115 disposed opposite to the rotation body 114, a lower-shaft 113b of which one end is connected to a bottom part of the rotation body 114 and the other end extends to a direction of the container.

Here, the shaft 113 is illustrated as the shape divided into the upper-shaft 113a and the lower-shaft 113b; however, one shaft 113 may be disposed so as to pass through the rotation body 114, or there is the case where the rotation body and the shaft may be integrated, and the structure thereof may be selected adequately.

The rotation body 114 is disposed inside the main body 11 so that an extension direction of the shaft 113 (upper-shaft 113a and lower-shaft 113b) can become coaxial with a rotation axis A.

Now, the grinder 1 of the present invention has, by providing specific features to the above rotation body 114 and the stator body 115, the structure that can perform grinding without adopting material such as metal or ceramic as the stator body 115.

Furthermore, when material such as permeable resin or glass and the like is adopted as the case 112 and the stator body 115 forming the main body 11, visual observation of grinder processing or visual checking for clogged positions due to the object to be ground may be allowed.

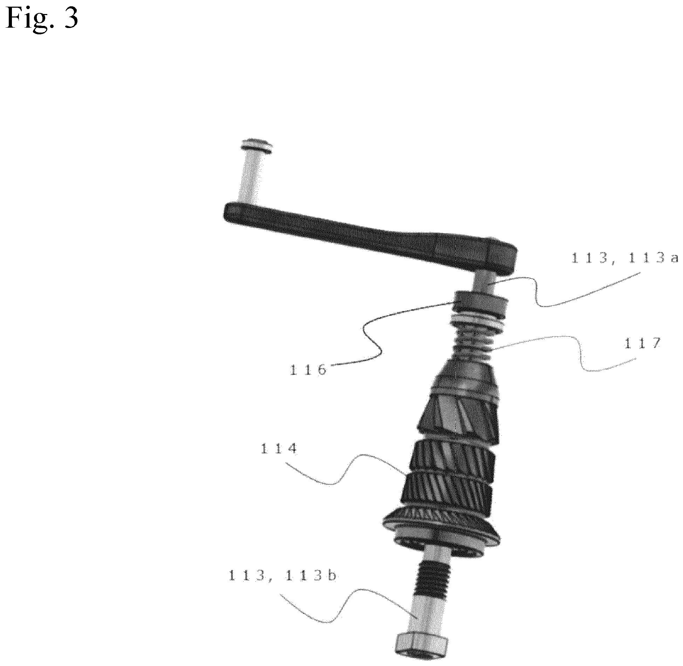

In addition, to the grinder 1, as shown in Fig. 2 and Fig. 3, a bearing 116 for smoothing the rotation of the shaft 113 (113a, 113b) and a resilient body 117 for maintaining the spacing between the rotation body 114 and the stator body 115 for adjusting the desired granularity of the powder are disposed.

### (Grinding Step)

As for a step for grinding the coffee beans X by the grinder 1, first a cap body 111 is detached from the case 112 configuring the body part 11 of the grinder, and to the container part 112a which is a space formed inside the case 112, the coffee beans X as the object to be ground are supplied, and then the cap body 111 is attached to the case 112 of the body part 11. The cap part 111 may only prevent scattering of the beans and may not be an independent part so far as this function is satisfied.

When the handle 10 and shaft 113 (upper-shaft 113a, lower-shaft 113b) are turned, the rotation body 114 rotates about the rotation axis A along the extension direction of the shaft 113 (upper-shaft 113a and lower-shaft 113b); the coffee beans X in the container part 112a are guided between the rotation body 114 and the stator body 115 disposed opposite to the rotation body 114 and go down gradually while being milled by the plural convex and concave blades. Then, the powdered coffee beans X are received in the receiver container 12.

### (About Configuration of Rotation Body and Stator Body)

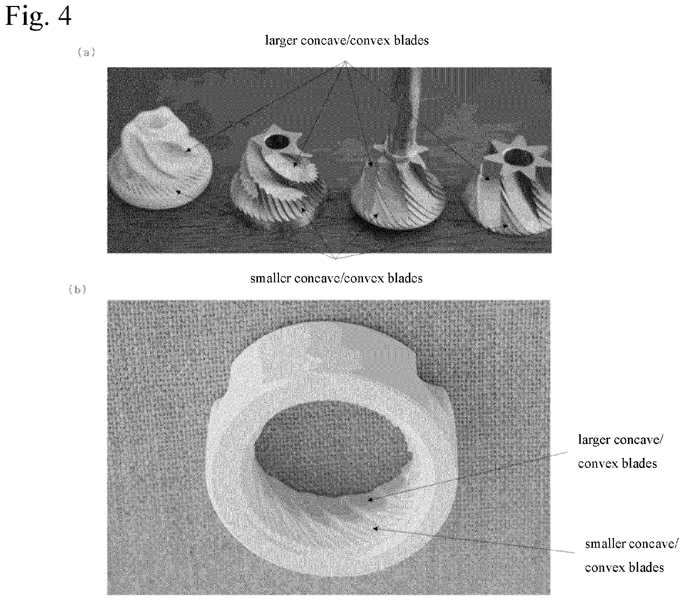

Fig. 4 (a) illustrates a rotation body adopted in a conventional grinder, and Fig. 4 (b) illustrates a stator body. The conventional rotation body has an almost conical shape and, at its lateral side, larger concave/ convex blades for guiding the object to be ground and smaller concave/convex blades for grinding to powdery states are formed continuously and partially overlappingly while being not considered to be configured as separated multi-stages along the rotational axis direction of the rotation body. Furthermore, as corresponding to the shape of the rotation body, to the stator body, larger concave/convex blades and smaller concave/ convex blades are formed continuously without being formed separated multi-stages.

On the other hand, the rotation body and the stator body of the present embodiment are applied with inventive ideas for accommodating the fine-powder suppression and the evenness of the granularity and the particle shape obtained as well as realizing an improvement of maintenance.

### (Rotation Body)

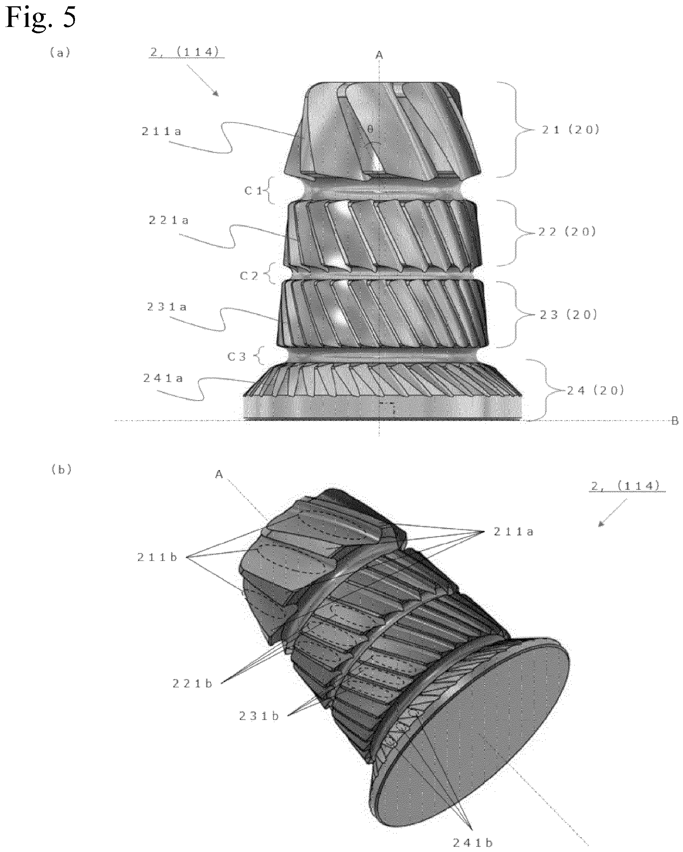

Fig. 5 is a drawing illustrating the rotation body 2 (114) of the present embodiment. The rotation body 2 exhibits an almost conical shape and is disposed inside the body part 11 so as to rotate about the rotation shaft A along the extension direction of the shaft 113 (upper-shaft 113a and lower-shaft 113b), which transfers a rotational motion of the handle 10 as described above, and the lateral side of the almost conical shape is formed with a concave/convex blades 20 to which a plurality of convex blades and concave parts are alternatively and continuously disposed. The detailed description of the rotation axis A is described as the line passing the top of the rotation body 2 exhibiting almost conical shape and crossing the bottom face B vertically, and according to the present embodiment, is same with an extension direction of the shaft 113. The concave/convex blades 20 are disposed slantingly to the direction of the rotation axis A so as to contribute to smooth guiding and grinding of the coffee beans X; however, the slanting angle θ is not limited particularly and may be selected adequately.

Here, the concave part of the concave/convex blades 20 is illustrated as lower than heights of convex blades (lengths of convex blades), and is not limited to the configuration to be formed lower than the height of bottom of the convex blades.

In addition, the concave/convex blades 20 have the configuration of the rotation body 2 from top and bottom in which each of the concave/convex blades at each stage is separated forming multi-stages and are different from the concave/convex blades that are formed continuously and partially overlappingly as the concave/convex blades adopted in a conventional conical-type grinder.

The detail is described as to be configured from first-stage convex/concave blades 21 which are formed by first-convex blades 211a and second convex parts 221b, second-stage convex/concave blades 22 which are formed by second convex blades 221a and second concave parts 221b, third concave/convex blades 23 which are formed by third-convex blades 231a and third-convex parts 231b, and fourth concave/convex blades 24 which are formed by fourth-convex blades 241a and fourth convex parts 241b.

Furthermore, when compared with those of the first-stage concave/convex blades 21, the second-stage concave/convex blades 22 are designed to have smaller (narrower) blade spacings to provide much more blade number and to provide shorter blade heights (such that the length of convex blade becomes shorter, and the depth of concave part becomes shallower). Similarly, the third-stage concave/convex blades 23 compared to the second-stage concave/convex blades 22 and the fourth-stage concave/convex blades 24 compared to the third concave/convex blades 23 have designed to have smaller (narrower) blade spacings to provide much more blade number (such that the length of convex blade becomes shorter, and the depth of concave part becomes shallower).

That is, since as in the rotation body 2 from top to bottom, the concave/convex blades formed to each stage have the blade heights and spacings gradually reduced and the blade number becomes increased, this configuration allows to perform grinding accommodating to the sizes of object to be ground under grinding and to grind the coffee beans X finer and finer stepwise while avoiding excess loads to suppress production of fine particles.

By this stepwise grinding, the advantage is provided in which the thermal impact to the object to be ground by heat produced under grinding can be reduced.

To the concave/convex blades for grinding such as rotation body 2 of the present embodiment, generally metal or ceramic has been adopted; however, since the object to be ground is ground stepwise and dispersedly and loads may not concentrated unlikely to conventional one, a required strength level can be lowered; hence the material may only be durable to such strength and various material may be adopted. Furthermore, the rotation body 2 of the present embodiment is formed, on the lateral side thereof, as four-staged convex/concave blades; however, there is no limitation to the stage number and may be adequately selected depending on sizes, hardness, desired granularities (particle sizes) of the object to be ground, and the like.

In addition, as shown in Fig. 5, to boundaries between each stage (between-stage space) between the first-stage concave/convex blades 21, second-stage concave/convex blades 22, third-stage concave/convex blades 23 and fourth-stage concave/convex blades 24, cavities C (C1-C3) are formed.

The cavities C disposed between concave/convex blades at each stage are void gaps formed by concave recesses of the rotation axis A disposed at vicinities of the boundaries between each stages of concave/convex blades; by disposing the cavities C, for example, the cavity C1 in Fig. 5 becomes the void gap temporally retaining the coffee beans X ground by the first-stage concave/convex blades 21 to prevent the issue in which the coffee beans X are rushed at a burst and pushed into the second lower-stage concave/convex blades 22 to cause unstable grinding and to enable smooth guiding to and grinding in the second-stage concave/convex blades 22 such that advantages to prevent excess grinding and clogging may be obtained. The cavities C2 and C3 in Fig. 5 also have the similar advantages.

Furthermore, as the result of grinding experiments using the rotation body 2 having multi-stage cavities C, the shapes of the coffee-beans X powder (particles) obtained were found to become even in the granularity and particle size when compared to a conventional conical-type grinder. It is contemplated that providing the cavities C between each stage may impart the position changes to the coffee beans X (of particle) after grinding and the surfaces of powder may be cut and/or ground evenly.

Even if the granularity is stable, and if the powder shapes are distorted and uneven, it is clear that the extracted ingredients and the concentration thereof become different, and for the evenness in extraction, the evenness in the powder shapes as well as the evenness (stability) in the granularity is required, and the grinder of this embodiment becomes one that is responsible to such high requirements.

The widths and depths of concave recesses for cavities C are desirably to be set depending on the particle diameters of the object to be ground by the concave/convex blades at the upper stage.

The cavity can be disposed either stator or rotation body and can provide the similar effect.

### (Stator)

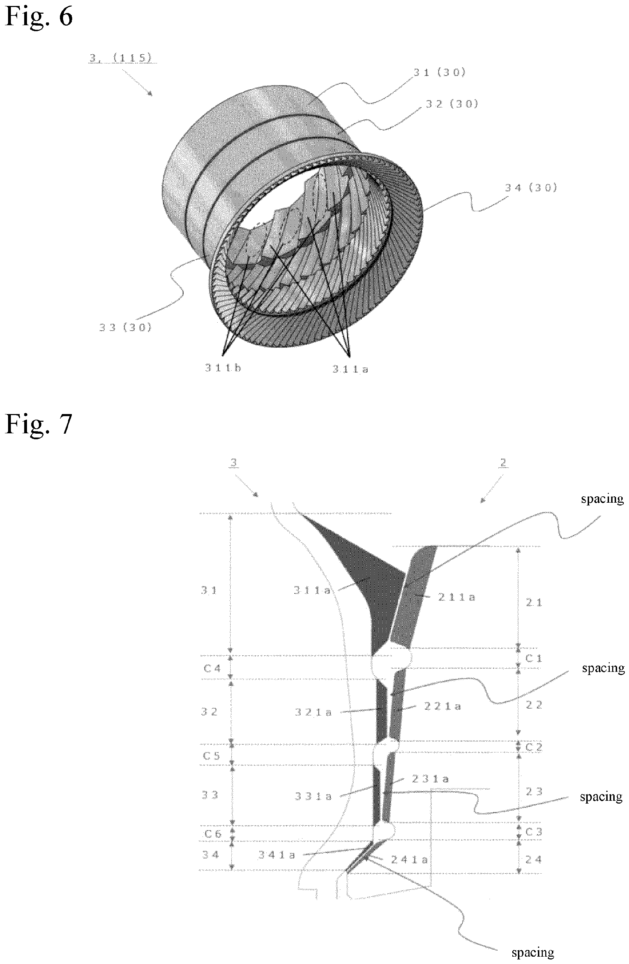

Fig. 6 is a perspective view of a stator body 3 (115) of the present embodiment. The stator body 3 exhibits an almost cylinder shape and encloses the above rotation body 2; the inner face thereof faces opposite to the lateral face part of the rotation body 2; and the shape thereof also corresponds to the shape of the lateral face part of the rotation body 2 so as to be disposed in the main body 11 of the grinder 1. In addition, to the inner face of the stator body 3, a plurality of concave parts formed along the rotation axis A direction of the rotation body are formed continuously and circumferentially, and the guiding part 30 is configured, which plays roles for assisting cutting and/or grinding by the concave/convex blades 20 by retaining the coffee beans X with the concave part and the convex part formed relatively higher than the bottom part of the concave part and for aligning and guiding the coffee beans X from top to bottom. Besides, the guiding part 30 is formed so as to correspond to the concave/convex blades 20 of the multi-stages formed on the lateral face part of the rotation part 2. Furthermore, to the guiding part 30 disposed to the stator body 3 and the concave/convex blades 20 disposed to the rotation body 2, predetermined clearances (spacings) are provided for preventing the interference between both members (refer to Fig. 7) such that the coffee beans X move smoothly from top to bottom while being cut and ground stepwise by the rotation body 2 and the stator body 3.

That is, as shown in Fig. 6 and Fig. 7, the plurality of concave parts 311b formed on the inner face of the stator body 3 and along the rotational axis A direction of the rotation body 2 are formed circumferentially and continuously, and the concave part 311b and the convex part 311a formed relatively higher than the bottom part of the concave part 311b retain the coffee beans X so as to assist cutting and/or grinding by the first-stage concave/convex blades and to guide toward the second-stage concave/convex blades 22 and the guiding part 32 of the second stage both disposed downward.

In addition, as shown in Fig. 7 showing cross sections of the rotation body 2 and the stator body 3, cavities C (C4-C6) are also formed similarly at the position on the inner face of the stator body 3 corresponding to the positions of the cavities C (C1-C3) formed to the rotation body 2. With respect to these cavities, the size (width and depth) may be adjusted as settings for each of the rotation body 2 and stator body 3.

In the present embodiment, although the guiding part is formed to the stator body 3, the concave/convex blades are also disposed to the stator body depending on hardness of the object to be ground such that cutting and/or grinding with the rotation body and the stator body may also be selected.

### (Experimental Instance)

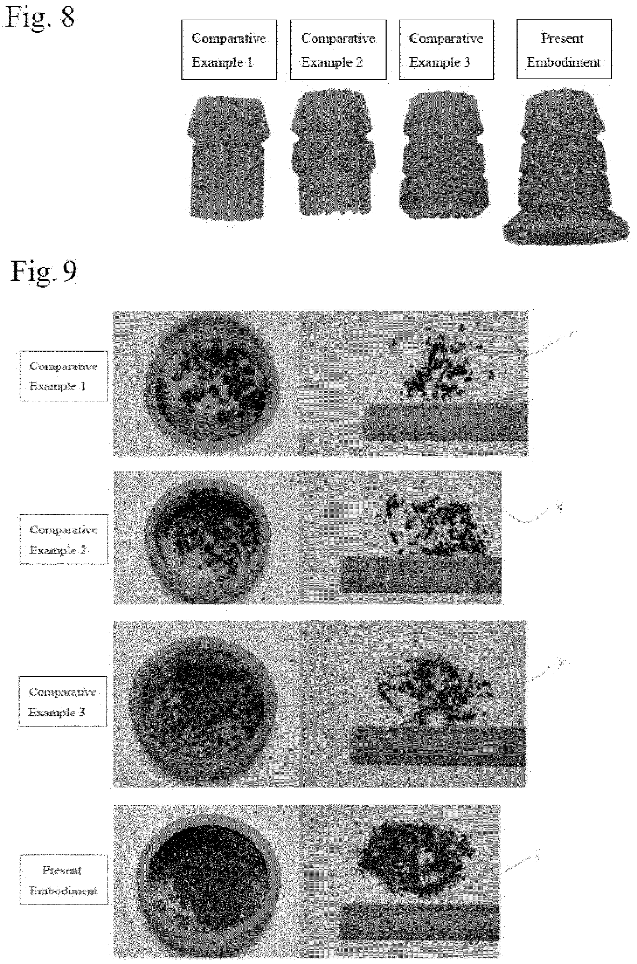

Fig. 8 shows a rotation body 2 of the present embodiment; as a comparable example 1 the rotator configured only by the first-stage concave/convex blades 21 for the configuration of the rotation body 2; as a comparable example 2 the rotator configured by the first-stage concave/convex blades 21 and the second-stage concave/convex blades 22 for the configuration of the rotation body; and as a comparative example 3 the rotator configured by the first-stage concave/convex blades 21, the second-stage concave, convex blades 22, and the third-stage concave/convex blades 23 for the configuration of the rotation body; and Fig. 9 is an illustration of powder conditions of the coffee beans X obtained by each of the comparative examples and the rotation body 2 of the present embodiment (first-stage concave/convex blades 21-fourth-stage concave/convex blades 24).

As understood from Fig. 8 and Fig. 9, by increasing the stage number of the concave/convex blades and decreasing the blade heights (blade lengths) and spacings depending on the stage number of the concave/convex blades, the cut and/or ground coffee beans X become stepwise smaller and smaller, and when examining the powder of the coffee beans X each obtained in the comparative example 1, comparative example 2, and comparative example 3; it have observed that the granularities and particle shapes gradually become even; and the advantage of the stepwise grinding has been confirmed.

### (Second Embodiment)

Next, a second embodiment will be described. The second embodiment has the common configuration with the first embodiment other than the stator body 3, and hence, explanations will be simplified such that the stator body 3 will be described in detail.

An appearance of the stator body 3 in this embodiment exhibits an almost cylinder shape similar to the stator body of the first embodiment to enclose the rotation body 2; the inner face thereof faces opposite to the lateral side of the rotation body 2; and the shape thereof also corresponds to the shape of the lateral face part of the rotation body 2 so as to be disposed in the body part 11 of the grinder 1.

Furthermore, to the inner face of the stator body 3, a plurality of concave parts along the rotation axis A direction of the rotation body are formed circumferentially and continuously and the guiding part 30 is configured, which plays roles for assisting cutting and/or grinding by the concave/convex blades 20 by retaining the coffee beans X with the concave part and the convex part formed relatively higher than the bottom part of the concave part and for aligning and guiding the coffee beans X from top to bottom.

Here, the stator body 3 is common with the stator body 3 in the first embodiment in the feature being formed with the plurality of concave parts circumferentially on the inner face to form the guiding part 30 and has the difference in the feature that does not correspond to the multi-sage configuration of the rotation body 2 (is not formed to multi-stages).

Furthermore, to the guiding part, cavities may be formed at the positions corresponding to the positions at a vicinity of the boundary between each stage of the concave/convex blades formed as the multi-stages.

The guiding part even in this embodiment, since the grinder of which the concave/convex blades formed as the multi-stages separated along the rotational axis A and has different shapes at each stage can cut and/or grind the object to be ground stepwise to make finer particles gradually, excess loads are not imparted to the object to be ground such that the production of fine powder can be suppressed and the granularity can become stable.

Furthermore, the object to be ground which is cut and/or ground at the upper stage is temporarily retained in the cavity and then is supplied gradually to the lower stages such that the trouble in that the object to be ground is supplied excessively to the lower stage causing overflow from grinding course may be suppressed; by the cavity, excess cutting and/or grinding is prevented; and the powder of the object to be ground with stable granularity may be obtained smoothly; and moreover, by imparting the position change to the object to be ground, the powder of the object to be ground having even shapes can be obtained so as not to make the cutting and/or grinding position of the object to be ground uneven as a conventional grinder.

### (Another Embodiment of Present Embodiment)

Although the above first embodiment and second embodiment have the configurations in which the concave/convex blades 20 are formed to the rotation body 2 and the guiding part 30 is formed to the stator body 3, the configuration in which the guiding part formed to the rotation body 2 and the concave/convex blades formed to stator body 3 may be allowed; the rotation body 2 rotates about the rotation axis A as the axis while retaining the coffee beans X in the concave part; and cutting and/or grinding is performed by contacting the concave/convex blades disposed on the inner face of the stator body to the coffee beans X to go down from top to bottom while making finer and finer particles.

Besides, if the rotation body is one that is adopted in a conventional conical-type grinder and is replaced with the rotation body 2 in the present embodiment, it is represented as one that only two kinds of concave/convex blades in the concave/convex blades 21 at the first stage and the concave/convex blades 24 in the fourth stage are formed as the multi-layered and are not separated along the rotation axis A direction as the multi-stages while being formed continuously and partially overlappingly (refer to Fig. 4), and when compared to the present embodiment that makes it possible to grind stepwise, this configuration is considered to grind the coffee beans X into the powder state at a stroke. Thus, blades are also disposed to the stator body similar to the rotation body; also, directions of blades thereof are arranged to the direction different from the inclinations of the concave/convex blades 20 formed on the lateral face of the rotation body (such that blade direction of the rotation body and blade direction of the stator body become a right angle) and hard material such as metal or ceramic is required.

On the other hand, since the concave/convex blades 20 of the present embodiment have the configuration for cutting and/or grinding the coffee beans X stepwise, the loads to the guiding part 30 becomes less; blades are not required to the guiding part 30; only a guiding function may be required for retaining the coffee beans X in the guiding part 30 on the inner face to assist cutting and/or grinding by the concave/convex blades 20 and to align the coffee beans X to guide downward smoothly such that resin materials and the like may be adopted without being limited to the materials with high toughness such as metal and ceramics.

Hence, the stator body 3 of the present invention may be a permeable resin material together with the case 112 of the body part 11 such that the process of grinding can be seen; an entertainment characteristics can be added to the work for milling the coffee beans X; and moreover, finding clogged positions or soils can further contribute improvement of maintenance.

Here, an entrance side of the second-stage concave/convex blades 22 may be formed to low shoulders (chamfered shape) for every other blade. Furthermore, the entrance side of the third-stage concave/convex blades 23, similar to the second-stage concave and convex blade 22, may also be formed to low shoulders (chamfered shape) for every other blade. Furthermore, the entrance side of the fourth-stage concave/convex blades 24, similar to the second-stage concave and convex blade 22, may also be formed to low shoulders (chamfered shape) for every other blade. By adopting such shape, flow-in amounts (biting amounts) may be increased. The "low shoulder (chamfered shape)" means the shape that is made lower than the heights of adjacent both concave/convex blades.

Furthermore, while not intending to limit the number of the fourth-stage concave/convex blades 24 specifically, in the present embodiment, the number of the four-stage concave/convex blades 24 is shown to be 50 as an example. However, when the number of the fourth-stage concave/convex blades 24 is set less than 50 (for example 40), the advantage may be obtained that machining of the fourth-stage concave/convex blades 24 becomes easy.

Furthermore, while not intending to limit the depth of recess bottom of the fourth-stage concave/convex blades 24 specifically, the depth may be offset toward a diameter side by 0.2 mm than that shown in the present embodiment to make flow paths narrower. With adopting this feature, small particularization of the object to be ground may further be realized.

Angles of blade-tips of the second-stage concave/convex blades 22 may be variable. Angles of blade-tips of the third-stage concave/convex blades 23 may also be variable as the angle of the second-stage concave/convex blades 22. As described above, by making at least one of the angle of the second-stage concave/convex blades 22 and the angle of the third-stage concave/convex blades 23 variable, it becomes easier to change and machining a pocket shape (spaces formed between the adjacent concave/convex blades).

Besides, while not intending to limit the positions of the blade-tip conical faces at (face at the most outer peripheral sides) of the third-stage concave/convex blades 23 specifically, the position may be offset toward an inner diameter side by 0.2 mm (heights of the concave/convex blades are made lower) than the position shown in the present embodiment. As such configuration, unevenness of the granularity under the rough milling of object to be ground may be low

Furthermore, R (radius) of root of the third-stage concave/convex blades 23 (connection part of the recess formed between the adjacent concave/convex blades and the concave/convex blades (both sides altogether)) may be set larger than R of root of the fourth-stage concave/convex blades 24 (connection part of the recess formed between the adjacent concave/convex blades and the concave/convex blades (both sides altogether)). For example, R (radius) of root of the third-stage concave/convex blades 23 may be 0.6 mm and R of root of the fourth-stage concave/convex blades 24 may be 0.3 mm and the like. By adopting such configurations, machining of the third-stage concave/convex blades 23 and the fourth-stage concave/convex blades 24 becomes easier.

In addition, by setting R (radius) of roots of the third-stage concave/convex blades 23 to be same, entrances of flow paths formed by the third-stage concave/convex blades 23 may be made narrower such that it become possible to thin blade thicknesses of the third-stage concave/convex blades 23.

As described above, depending on sizes of the object to be ground and the fineness of desired powder (particle size), by in the present invention, selecting adequately the stage number of rotation body (and stator body) and the sizes and shapes of the concave/convex blades at each stage of the rotation body, the object to be ground can be cut and/or ground stepwise and as the result, the powder having even particle sizes and particle shapes can be produced and the object to be ground is not limited to the coffee beans X such that the grinder, which can be applied to various foods and also other materials, can be provided.

### Brief Description of Signs

1 grinder
10 handle
101 knob
11 body part
111 cap part
112 case
112a container part
113 shaft
113a upper-shaft, 113b lower-shaft
114, 2 rotation body
115, 3 stator body
116 bearing
117 resilient body
12 receiver container
21(20) first-stage concave/convex blades
211a convex blade in first-stage concave/ convex blades, 211b concave blade in first-stage concave/convex blades
22(20) second-stage concave/convex blades
221a convex blade of second-stage concave/convex blades, 221b concave blades of second-stage concave/convex blades
23(20) third-stage concave/convex blades
231a convex blades of third-stage concave/convex blades 231b concave blades third-stage concave/convex blades
24(20) fourth-stage concave/convex blades
241a convex blade of fourth-stage concave/convex blades, 241b concave blades convex blade of fourth-stage concave/convex blades
31(30) first-stage guiding part
311a convex part of first-stage guiding part, 311b convex part of first-stage guiding part
32(30) second-stage guiding part
321a convex part of second-stage guiding part, 321b convex part of second-stage guiding part
33(30) third-stage guiding part
331a convex part of third-stage guiding part, 331b convex part of third-stage guiding part
34(30) fourth-stage guiding part
341a convex part of fourth-stage guiding part, 341b convex part of fourth-stage guiding part
A rotation axis of rotation body
B bottom face
C, C1-C6 cavity
X object to be ground (coffee beans)
θ slanting angle to rotation axis of concave/convex blades degrees

## Claims

1. A grinder including a rotation body exhibiting an almost conical shape and having a rotation axis, the rotation axis passing a top of the almost conical shape and crossing a bottom face at a right angle, and a grinding mechanism, the grinding mechanism having a configuration for grinding an object to be ground by a stator body exhibiting an almost cylinder shape and facing an inner face opposite to a lateral face part of the rotation part,
**characterized in that** a lateral face of the rotation body and a surface of the inner face of the stator body comprise concave/convex blades continuing convex blades and concave part alternatively, the concave/convex blades are formed as multi-stages along to a rotation axis direction of the rotation body, and the concave/convex blades at each stage are each separated along a rotation axis direction of the rotation body.

2. A grinder including a rotation body exhibiting an almost conical shape and having a rotation axis, the rotation axis passing a top of the almost conical shape and crossing a bottom face at a right angle, and a grinding mechanism, the grinding mechanism having a configuration for grinding an object to be ground by a stator body exhibiting an almost cylinder shape and facing an inner face opposite to a lateral face part of the rotation part,
**characterized in that** at least one surface of the lateral face of the rotation body and the inner face of the stator body opposite each other comprises concave/convex blades continuing convex blades and concave part alternatively, the concave/convex blades are formed as multi-stages along a rotation axis direction, the concave/convex blades in each stage are each separated along the rotation axis direction, a guiding part is formed on a surface of other one for aligning an object to be ground to guide from top to bottom.

3. The grinder according to claim 1, wherein, cavities are formed at each stage at a vicinity of boundaries of the concave/convex blades of the concave/convex blades formed to the rotation body and/or the stator body as multi-stages.

4. The grinder of claim 2, wherein the cavities are formed at a vicinity of the boundaries of concave/convex blades at each stage formed as multi-stages, and/or the cavities are formed at relative positions at a vicinity of boundaries of the concave/convex blades at each of the stages of the guiding part.
